# EUROPÄISCHE PATENTSCHRIFT

(11) **EP 0 275 424 B1**
(45) Veröffentlichungstag und Bekanntmachung des Hinweises auf die Patenterteilung: **06.04.1994**
(21) Anmeldenummer: 87117725.9
(22) Anmeldetag: 01.12.1987
(51) Int. Cl.: G01N 21/03, G01N 21/65

(54) **Einrichtung zur unmittelbaren Beeinflussung der thermischen Verhältnisse in von optischen Strahlen bzw. Strahlenbündeln durchlaufenen Kammern**
Device for directly influencing the thermal exchanges in cuvets traversed by optical rays or beams
Dispositif de contrôle direct des états thermiques dans des cuvettes traversées par des rayonnements ou faisceaux optiques

(30) Priorität: 21.01.1987 DE 3701508
(43) Veröffentlichungstag der Anmeldung: 27.07.1988
(73) Patentinhaber: DORNIER GMBH, D-88004 Friedrichshafen (DE)
(72) Erfinder: Heynatz, Johann Theodor, Prof. Dr., D-7997 Immenstaad (DE); Schmidt, Wolfgang, Dr.-Ing., D-7990 Friedrichshafen (DE); Bücher, Hermann, Dr. rer. nat., D-5100 Aachen (DE); Schultz, Arnulf, Dr. rer. nat., D-5162 Niederzier (DE)
(74) Vertreter: Landsmann, Ralf, Dipl.-Ing.

(56) Entgegenhaltungen:
- DE-A- 2 522 371
- US-A- 4 099 143
- S.M. GORLIN und I.I. SLEZINGER: "Wind tunnels and their instrumentation", 1966, Seiten 63-65, Israel Program for Scientific Translations, Jerusalem, IL
- PATENT ABSTRACTS OF JAPAN, Band 9, Nr. 257 (P-396)[1980], 15. Oktober 1985; & JP-A-60 107 539
- PATENT ABSTRACTS OF JAPAN, Band 10, Nr. 305 (P-507)[2361], 17. Oktober 1986; & JP-A-61 118 638
- PATENT ABSTRACTS OF JAPAN, Band 10, Nr. 12 (P-421)[2069], 17. Januar 1986; & JP-A-60 168 035
- OPTICAL ENGINEERING, Band 25, Nr. 4, April 1986, Seiten 556-560; J.B. WEDDING et al.: "Wind tunnel characterization of aerial spray nozzles using the laser particle spectral analyzer"
- SOVIET JOURNAL OF QUANTUM ELECTRONICS, Band 15, Nr. 10, Oktober 1985, Seiten 1389-1395; J.P. TARAN: "Coherent anti-stokes Raman scattering diagnostics of combustion and other reactive media at ONERA"
- OPTICAL ENGINEERING, Band 16, Nr. 5, September/Oktober 1977, Seiten 505-512; R.B. LANCASHIRE et al.: "The NASA high-power carbon dioxide laser a versatile tool for laser applications"

## Beschreibung

Die Erfindung betrifft von optischen Strahlen oder Strahlenbündeln durchlaufene Kammern, insbesondere Ramankammern, mit Mitteln zur unmittelbaren Beeinflussung deren thermischer Verhältnisse, in Verbindung mit einem offenen oder geschlossenen Gasaustauschkreis, nach dem Oberbegriff des Anspruchs 1.
Die Erfindung geht aus z.B. von sogenannten Ramankammern mit quadratischem oder kreisförmigem Querschnitt und einer demgegenüber größer bemessenen Längserstreckung. Derartige Kammern enthalten eine Füllung beispielsweise mit Wasserstoff und werden mit bestimmter Frequenz unter mehrfacher Reflexion an den Kammerenden in Richtung ihrer Längserstreckung von optischen Strahlen bzw. Strahlenbündeln, beispielsweise Laserstrahlen bzw. Laserstrahlbündeln durchlaufen.

Aus diesem Durchlaufen resultieren Frequenzänderungen der optischen Strahlen bzw. Laserstrahlen in vorbestimmter Weise in Abhängigkeit von der Eintrittsfrequenz der Strahlen in die Kammer und der Art des gasförmigen Mediums in der Kammer. Der Austritt der Strahlen aus der Kammer erfolgt mit einer vom Eintritt abweichenden, gewünschten Frequenz.
Die Gesamtmenge der Strahlen bildet in solchen Kammern ein Strahlenbündel, das zu den Kammerenden hin etwas aufgeweitet und im Kammermittelbereich etwas zusammengezogen verläuft. Störend auf die Arbeitsweise wirkt sich unter anderen Einflüssen aus, daß durch die Strahlen bzw. Strahlenbündel, bezogen auf die Kammerlängserstreckung, örtlich Wärme erzeugt wird. Die örtlich auftretende Wärme muß zur Sicherung der Funktion der Kammer abgeführt werden. Das ist z.B. durch eine Gasumwälzung in Verbindung mit einer Wärmetauscher-Einrichtung im Gasstrom möglich.
Bekannt sind Einrichtungen der genannten Art, bei denen der Strahl bzw. das Strahlenbündel ummantelt ist und der Mantel von außen, das heißt mittelbar gekühlt wird.

Es ist durch die **US-A- 4,099,143** eine Lasereinrichtung bekannt, bei der die von optischen Strahlen durchlaufene Kammer mit Hilfe eines Querstromgebläses auf ihrer gesamten oder nahezu gesamten Längserstreckung von einem Gasaustauschstrahl quer zum Strahlenverlauf durchströmt wird.

Aufgabe der Erfindung ist es, dem Bekannten gegenüber, den Gasaustausch zur Beeinflussung der thermischen Verhältnisse in der Kammer mit geringstmöglichem Dauerenergieeinsatz zu bewirken.

Die gestellte Aufgabe wird gelöst durch eine Ausbildung nach den Merkmalen des kennzeichnenden Teils des Anspruches 1 und in weiterer, vorteilhafter Ausgestaltung nach den Merkmalen der übrigen Ansprüche.

Bei einer erfindungsgemäß ausgebildeten Kammer wird, bezogen auf deren Längserstreckung, der zur Verfügung stehende Gasaustauschstrom nur Bereichen oder Abschnitten der Kammer zugeleitet, die einer erhöhten Wärmebelastung unterliegen. Dies ist bei Kammern mit optischem Strahlendurchgang, insbesondere im mittleren und in geringerem Maße aber auch im Bereich der Reflexionen der Strahlen in den äußeren Kammerenden der Fall.
Die in Kammerlängsrichtung unterschiedliche Wärmeausbildung resultiert daraus, daß die durch die Mehrfachreflexion die Kammer durchlaufenden optischen Strahlen Strahlenbündel bilden, die im mittleren Kammerbereich eine Einschnürung und gegen die Reflexionsflächen in den Kammerenden hin beidseitig eine Aufweitung aufweisen. Der Bereich der Einschnürung weist eine stärkere Aufheizung des Gasaustauschstromes in der Kammer auf, ebenso wie - in geringerem Ausmaße - auch die Kammerenden infolge der Aufheizung der dort angebrachten Reflexionsspiegel.
Werden, bezogen auf die Kammerlängserstreckung, die äußeren Abschnitte der Kammer außerhalb des Gasaustauschkanals bzw. Gasaustauschstromes angeordnet, so läßt sich durch die Konzentration des Gasaustauschstromes mittels der erfindungsgemäß angeordneten bzw. ausgebildeten Strahlführungswände und bzw. oder Strömungsleitkörper eine verstärkte Wärmeabfuhr, insbesondere aus dem Kammermittelbereich bei gleichbleibendem Aufwand für die Erzeugung des Gasaustauschstromes erreichen.
Mittels der erfindungsgemäß verstellbaren bzw. einstellbaren Wände der Düse bzw. des Diffusors läßt sich die erwünschte Konzentration des Gasaustauschstrahles zur Erzielung einer Optimierung der Wärmeabführung bei geringstmöglichem Energieaufwand präzise einstellen.
Eine entsprechende Wirkung wird nach einer weiteren erfindungsgemäßen Ausbildung durch einstellbare Änderung der Länge der Kammer bzw. deren äußerer Abschnitte erreicht.

Zur Einstellung des Austrittsquerschnittes des Gasaustauschstromes aus der Kammer in den Diffusor sind nach einer weiteren Ausbildung der Erfindung zwischen Kammer und Diffusor schieberförmig in den Gasaustauschstrom verstellbare Leitbleche angeordnet.
Mittels einer Regelung der Strömungsgeschwindigkeit, unterschiedlich verteilt über den Kammer-Durchtrittsquerschnitt, kann ebenfalls eine Anpassung und Konzentration des Gasaustauschstromes auf Bereiche erhöhter Wärmeausbildung in der Kammer erreicht werden.
Die dazu erfindungsgemaß vorgeschlagenen siebförmigen bzw. wabenförmigen Strömungsleitkörper bewirken eine Ablenkung des Gasaustauschstromes z.B. im äußeren Bereich des Durchtrittsquerschnittes der Kammer und damit eine Konzentration des Gasaustauschstrahles mit Beschleunigungseffekt gegenüber dem zentralen Bereich.

Werden über den Durchtrittsquerschnitt der Kammer örtlich unterschiedliche Strömungsgeschwindigkeiten für den Gasaustauschstrahl gefordert, können Strömungsleitkörper z.B. in der Art siebförmiger Gitter oder Waben mit unterschiedlichen Maschenweiten verwendet werden. So kann z.B. die Maschenweite des Gitters im Zentrumsbereich des Durchtrittsquerschnitts der Kammer größer als in Außenbereichen ausgeführt sein und zwar so, daß im Zentrum ein größerer Luftdurchsatz mit größerer Durchsatzgeschwindigkeit und einer stärkeren Kühlwirkung erzielt wird.
Erfindungsgemäß besteht eine weitere Möglichkeit zur Reduzierung des Aufwandes für den Gasaustauschstrom in einer zusammengefaßten Anordnung mehrerer Kammern zu einem Block.
Wie allgemein auf dem vorliegenden Fachgebiet bekannt, treten bei gepulster Wärmezuführung auch Druckwellen auf. Gemäß der Erfindung sind daher die Kammerwände mit Absorptionsmatten belegt.

Zu Simulationszwecken ist gemäß eines Ausführungsbeispiels der Erfindung vorgesehen, der Kammer zur Simulation der Erwärmung eines gasförmigen Mediums durch optische Strahlen oder Strahlenbündel eine Wärmeerzeugungseinrichtung zuzuordnen.
Im Zusammenhang mit der Simulation sind zur Erzielung der Aufheizung des gasförmigen Mediums Mittel zur Erzeugung eines Laserstrahles oder Laserstrahlbündels vorgesehen, wobei als Gasaustauschmedium Luft dient, die zur Unterstützung der Wärmeabsorption bzw. zur Beschleunigung der Wärmeaufnahme einen Mediumzusatz enthält. Schwefelhexafluorid ist dafür ein geeigneter Mediumzusatz.

In der Zeichnung sind Ausführungsbeispiele der Erfindung dargestellt, die nachfolgend beschrieben werden.

Es zeigt:
- Figur 1: in schematisierter Darstellung eine Seitenansicht der erfindungsgemäßen Einrichtung mit geschlossenem Gasaustauschstrom in Verbindung mit einer Ramankammer,
- Figur 2: die Einrichtung gemäß Figur 1 in Sicht von oben,
- Figur 3: in schematischer Darstellung ein weiteres Ausführungsbeispiel der erfindungsgemäßen Einrichtung mit einem gegenüber der Ausführung nach Figur 1 bzw. 2 offenen Gasaustauschstrom,
- Figur 4: die Einrichtung gemäß Figur 3 in Sicht von oben und
- Figur 5: in einem Ausschnitt eine Ausführung mit einstellbaren Kammerwänden in perspektivischer, schematisierter Darstellung.

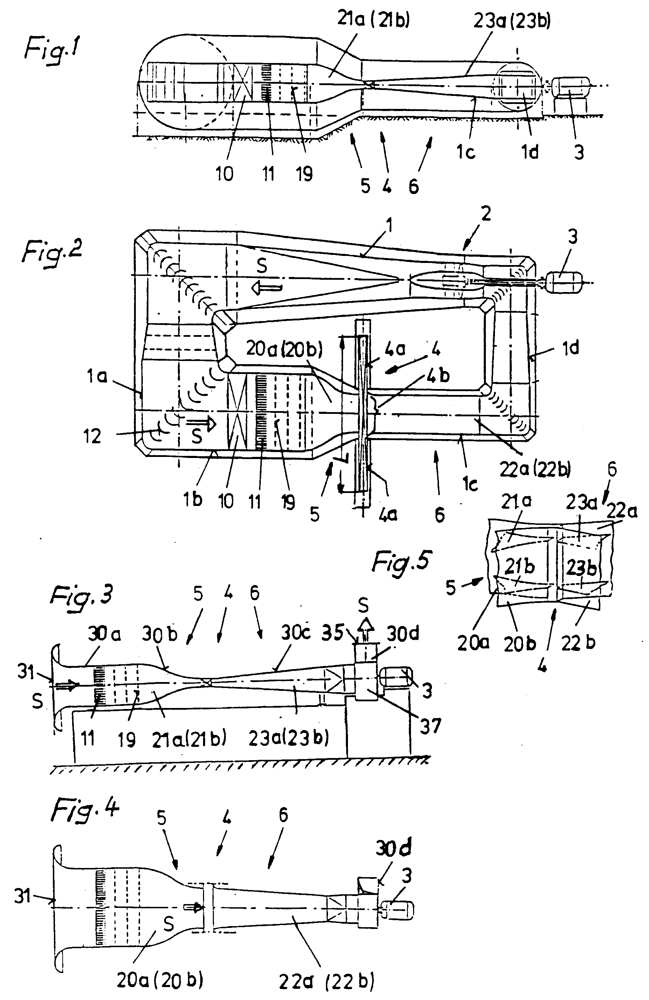

Bei der Ausführung gemäß Figur 1 bzw. Figur 2 setzt sich die geschlossen arbeitende Einrichtung zur Führung eines Gasaustauschstromes zusammen aus einem Strömungskanal 1, in den an geeigneter Stelle ein Gebläse 2 eingesetzt ist und dessen Antriebsmotor 3, einer Ramankammer 4, einer der Ramankammer 4 vorgeordneten Strahldüse 5 sowie einem der Ramankammer 4 nachgeordneten Diffusor 6.
Ferner enthält der Kanalabschnitt 1b eine Wärmetauschereinheit 10 und ein Leitgitter 11 zur Strömungsausrichtung vor dem Düseneingang. Die einzelnen Kanalabschnitte 1, 1a, 1b, 1c bzw. 1d sind über Kanalkrümmer mit entsprechenden Leitschaufelgittern 12 zu einem geschlossenen Kanalsystem vereinigt.

Bei dem gezeigten Ausführungsbeispiel gemäß Figur 1 bzw. Figur 2 ist die Ramankammer 4 bekannter Bauart und Wirkungsweise in ihrer Längserstreckung L quer zur Strömungsrichtung des Gasaustauschstromes S bzw. die Strahldüse 5 und der Diffusor 6 so angeordnet, daß die äußeren Abschnitte 4a der Ramankammer 4 gegenüber dem zentralen Kammerbereich 4b ausserhalb der Strömungsführung der Strahldüse 5 bzw. des Diffusors 6 liegen und somit nicht vom Gasaustauschstrahl S durchströmt werden.
Gegenüber der festgelegten Anordnung der Ramankammer 4 relativ zu den Gasaustausch-Kanalabschnitten der Düse 5 bzw. des Diffusors 6, sind gemäß dem Ausführungsbeispiel nach Figur 5 in bezug auf die Längserstreckung L der Ramankammer 4 verstellbare bzw. einstellbare Kanalwandabschnitte der Düse 5 bzw. des Diffusors 6 vorgesehen.
Gemäß Figur 5 sind die einander gegenüberliegenden und zueinander in Strömungsrichtung konvergierend verlaufend angeordneten Düsenwände 20a, 20b einrichtungsfest vorgesehen. Demgegenüber sind die zugehörigen, einander gegenüberliegend angeordneten Düsenwände 21a, 21b in Richtung der Längserstreckung L der Ramankammer 4 einstellbar bzw. verstellbar ausgebildet.

In der gleichen Weise sind auch die Wände 22a, 22b des Diffusors 6 einrichtungsfest vorgesehen, während die Wände 23a, 23b in Übereinstimmung mit den Wänden 21a, 21b der Strahldüse 5 verstellbar bzw. einstellbar in bezug auf die Längserstreckung L der Kammer 4 ausgeführt sind.

Bei dem in Figur 3 bzw. 4 gezeigten Ausführungsbeispiel wird die Einrichtung zur unmittelbaren Beeinflussung der thermischen Verhältnisse in Kammern vorangehend beschriebener Art im sogenannten offenen Gasaustausch betrieben.
Der Strömungskanal weist hierbei einen Einsaugabschnitt 30a mit einer Ansaugöffnung 31, einen Düsenabschnitt 30b, einen Diffusorabschnitt 30c, sowie einen Abströmabschnitt 30d mit der Ausströmöffnung 35 auf.
Der Einsaugabschnitt 30a nimmt Leitgitter 11 bzw. Leitkörper 19 der bereits bei der Ausführung gemäß Figur 1 bzw. 2 beschriebenen Art und Wirkungsweise auf.
In den Ausgangsabschnitt 30d des Kanals ist ein von einem Motor 3 angetriebenes Gebläse 37 eingesetzt, mittels dem der Gasaustauschstrom S durch Ansaugen über die Ansaugöffnung 31, die Düse 5, die Kammer 4 zum Diffusor 6 und über den Ausströmabschnitt 30d zur Ausströmöffnung 35 gefördert wird.

Die beschriebene Ausführung ist in der gleichen Weise wie die nach Figur 1 bzw. 2 mit in bezug auf die Längserstreckung L der Kammer 4 verstellbaren bzw. einstellbaren Kanalwänden 21a, 21b bzw. 23a, 23b, wie sie in Figur 5 gezeigt sind, ausgestattet.

## Patentansprüche

1. Von optischen Strahlen oder Strahlenbündeln durchlaufene Kammer, insbesondere Ramankammer, mit Mitteln zur unmittelbaren Beeinflussung deren thermischer Verhältnisse, in Verbindung mit einem offenen oder geschlossenen Gasaustauschkreis, mit einem Strömungserzeuger zur Erzeugung einer Strömung senkrecht oder annähernd senkrecht zum Strahlenverlauf in der Kammer,
**dadurch gekennzeichnet, daß**
- sich die Kammer (**4**) in Bezug auf ihre Längserstreckung (**L**) in mehrere Abschnitte (**4a; 4b**) gliedert und zwar in Bereiche (**4b**) und dazu seitliche Bereiche (**4a; 4a**) , daß
- die seitlichen Abschnitte (**4a; 4a**) der Kammer (**4**) gegenüber den Abschnitten (**4b**) in Bezug auf die Intensität der Durchströmung einer geringeren Beaufschlagung ausgesetzt sind und
- daß dem Gasaustauschkreis zur Konzentration bzw. Ausrichtung des Gasaustauschstrahles (**S**) auf Bereiche örtlich erhöhter Erwärmung in der Kammer (**4**) entsprechend ausgebildete, den Gasaustauschkreis in seinem Querschnitt verjüngende bzw. in seiner Intensität konzentrierende Führungswände (**21a;21b**) und bzw. oder Strömungsleitkörper (**19**) zugeordnet sind.

2. Kammer nach Anspruch 1, **dadurch gekennzeichnet**, daß zur Erzeugung des Gasaustauschstrahles (**S**) für die Durchströmung der Kammer (**4**) ein in an sich bekannter Weise ein Gebläse (**2**) mit einer Düsenanordnung (**5**) und einem Diffusor (**6**) enthaltender Gasaustauschkreis vorgesehen ist.

3. Kammer nach Anspruch 1 und bzw. oder 2, **dadurch gekennzeichnet**, daß die einander gegenüberliegenden Führungswände (**21a**, **21b**) der Strahldüse (**5**) in Richtung der Längserstreckung (**L**) der Kammer (**4**) einstellbar vorgesehen sind.

4. Kammer nach einem der vorangehenden Ansprüche, **dadurch gekennzeichnet**, daß die Längserstreckung (**L**) der Kammer (**4**) bzw. der äußeren Kammerabschnitte (**4a**) zur Veränderung des Verhältnisses der Gesamtkammerlänge (**L**) zur Länge des Abschnittes (**4b**) einstellbar vorgesehen sind.

5. Kammer nach einem der vorangehenden Ansprüche, **dadurch gekennzeichnet**, daß entsprechend den verstellbaren Wänden (**21a, 21b**) der Strahldüse (**S**) einander gegenüberliegende Führungswände (**23a, 23b**) des Diffusors (**6**) verstellbar sind.

6. Kammer nach einem der vorangehenden Ansprüche, **dadurch gekennzeichnet**, daß zwischen Kammer (**4**) und Diffusor (**6**) zur Einstellung des Austrittsquerschnittes aus der Kammer (**4**) in den Diffusor (**6**) in den Gasaustauschstrom (**S**) schieberförmig verstellbare Leitbleche vorgesehen sind.

7. Kammer nach einem der vorangehenden Ansprüche, **dadurch gekennzeichnet**, daß die Strömungsgeschwindigkeit des Gasaustauschstrahles (**S**) über die Kammer (**4**) örtlich unterschiedlich einstellbar ist.

8. Kammer nach einem der vorangehenden Ansprüche, **dadurch gekennzeichnet**, daß als Strömungsleitkörper (**19**) siebartig oder wabenartig ausgebildete Gitter vorgesehen sind.

9. Kammer nach einem der vorangehenden Ansprüche, **dadurch gekennzeichnet**, daß die Maschenweite der Gitter (**19**) im Zentrumsbereich (**4b**) des Durchtrittsquerschnittes der Kammer (**4**) größer als im äußeren Bereich bemessen ist.

10. Kammer nach einem der vorangehenden Ansprüche, **dadurch gekennzeichnet**, daß im Gasaustauschstrom (**S**) mehrere Kammern (**4**) in einem Block zusammengefasst angeordnet sind.

11. Kammer nach einem der vorangehenden Ansprüche, **dadurch gekennzeichnet**, daß zumindest die Wände der Kammer (**4**) mit Absorptionsmatten versehen sind.

12. Kammer nach einem der vorangehenden Ansprüche, **dadurch gekennzeichnet**, daß zur Simulation von in Laser- bzw. Ramankammern bei Strahlendurchgang herrschender thermischer Verhältnisse, die Einrichtung für einen offenen Gasaustausch ausgebildet ist.

13. Kammer nach einem der vorangehenden Ansprüche, **dadurch gekennzeichnet**, daß zur Simulation der Erwärmung eines gasförmigen Mediums in Laser- bzw. Ramankammern (**4)** entsprechend der durchgehenden optischen Strahlung bzw. Strahlenbündel, eine Wärmeerzeugungseinrichtung in die Kammer (**4**) eingesetzt ist.

14. Kammer nach einem der vorangehenden Ansprüche, **dadurch gekennzeichnet**, daß Mittel zur Erzeugung eines Laserstrahles bzw. Strahlenbündels vorgesehen sind und daß der als Gasaustauschmedium im offenen Austausch dienenden Luft als Wärmeabsorptionsmittel ein Mediumzusatz zugeführt wird.

15. Kammer nach einem der vorangehenden Ansprüche, dadurch gekennzeichnet, daß der Strahl bzw. das Strahlenbündel ein CO₂-Laserstrahl bzw. Strahlenbündel ist und wobei der als Gasaustauschmedium im offenen Austausch dienenden Luft als Absorptionsmittel für den Laserstrahl ein Zusatz von Schwefelhexafluorid (**SF₆**) zugeführt wird.

## Claims

1. A chamber which is passed through by optical beams or beams of rays, in particular a Raman chamber, comprising means of directly effecting its thermal conditions, in conjunction with an open or closed gas-exchange circuit, with a flow generator for producing a flow vertically or virtually vertical to the course of beams in the chamber, **characterised in that**
- the chamber (4) is divided relative to its longitudinal extent (L) into a plurality of sections (4a; 4b), i.e. into sections (4b) and associated lateral sections (4a; 4a);
- the lateral sections (4a; 4a) of the chamber (4) are, by comparison with the sections (4b) and relative to the intensity of flow-through, subject of a lesser load; and
- the gas-exchange circuit is, for concentration or alignment of the gas-exchange stream (S) on areas of locally increased heating in the chamber (4), associated with guide walls (21a; 21b) and/or flow-guide elements (19), which are suitably arranged and cross-sectionally narrow the gas-exchange circuit or concentrate it in its intensity.

2. Chamber according to claim 1, **characterised in that**, for the purpose of producing a gas-exchange stream (S) for flowing through the chamber (4), a gas-exchange circuit is provided which in a conventional manner comprises a blower (2) with a nozzle arrangement (5) and a diffuser (6).

3. Chamber according to claim 1 and/or 2, **characterised in that** the opposing guide walls (21a, 21b) of the nozzle (5) are arranged to be adjustable in the direction of the longitudinal extent (L) of the chamber (4).

4. Chamber according to one of the above claims, **characterised in that** the longitudinal extent (L) of the chamber (4) or the outer chamber sections (4a) are arranged to be adjustable for the purpose of changing the overall length ratio of the chamber (L) relative to the length of the section (4b).

5. Chamber according to one of the above claims, **characterised in that** opposite guide walls (23a, 23b) of the diffuser (6) are adjustable to correspond with the adjustable walls (21a, 21b) of the nozzle (S).

6. Chamber according to one of the above claims, characterised in that guide plates, which are slide-shaped and adjustable into the gas-exchange flow, are provided between the chamber (4) and the diffuser (6) for the purpose of adjusting the outlet cross-section from the chamber (4) into the diffuser (6).

7. Chamber according to one of the above claims, **characterised in that** the flow speed of the gas-exchange stream (S) can be adjusted to differ locally via the chamber (4).

8. Chamber according to one of the above claims, **characterised in that** sievelike or honeycomblike grids are provided as flow-guiding bodies (19).

9. Chamber according to one of the above claims, **characterised in that** the mesh of the grids (19) is wider in the central area (4b) of the passage cross-section of the chamber (4) than in the outer area.

10. Chamber according to one of the above claims, **characterised in that** in the gas-exchange stream (S) is arranged a plurality of chambers (4) combined in a block.

11. Chamber according to one of the above claims, **characterised in that** at least the walls of the chamber (4) are provided with absorption mats.

12. Chamber according to one of the above claims, **characterised in that** the device is designed for an open gas exchange for the purpose of simulating thermal conditions in laser or Raman chamber during the passage of beams.

13. Chamber according to one of the above claims, **characterised in that** a heat-generating device is inserted into the chamber (4) for the purpose of simulating the heating of a gaseous medium in laser or Raman chambers (4) relative to optical beams or beams of rays passing through.

14. Chamber according to one of the above claims, **characterised in that** means are provided for producing a laserbeam or beams of rays, and that an added medium serving as a heat-absorption means is fed to the air which serves as a gas exchange medium in an open exchange.

15. Chamber according to one of the above claims, **characterised in that** the beam or the beam of rays is a CO₂ laserbeam of beam or rays, and that the air serving as a gas exchange medium in open exchange is fed a supplement of sulfurhexafluoride (SF₆) as an absorption means for the laserbeam.

## Revendications

1. Chambre parcourue par des rayons ou faisceaux de rayons optiques, en particulier chambre de Raman, comprenant des moyens pour agir directement sur les conditions thermiques de la chambre, en combinaison avec un circuit d'échange de gaz ouvert ou fermé, avec un générateur d'écoulement pour produire un écoulement perpendiculairement ou approximativement perpendiculairement au parcours des rayons dans la chambre, caractérisée par le fait que
- la chambre (4) est divisée, dans sa direction longitudinale (L), en plusieurs sections (4a; 4b), à savoir en zones (4b) et en zones (4a; 4a) latérales par rapport à ces dernières,
que les zones latérales (4a: 4a) de la chambre (4) sont, comparativement aux zones (4b), exposées à un écoulement de moindre intensité, et
- qu'en vue de la concentration ou du redressement du jet d'échange de gaz (S) dans des zones à échauffement localement accru dans la chambre (4), des parois de guidage (21a; 21b) et/ou des corps directeurs d'écoulement (19) de conformation appropriée, rétrécissant la section du circuit d'échange de gaz ou concentrant l'intensité dudit circuit, sont associés au circuit d'échange de gaz.

2. Chambre suivant la revendication 1, caractérisée par le fait que pour la production du jet d'échange de gaz (S) pour l'écoulement à travers la chambre (4), il est prévu un circuit d'échange de gaz contenant de façon connue en soi une soufflante (2) avec un agencement de tuyère (5) et un diffuseur (6).

3. Chambre suivant la revendication 1 et/ou 2, caractérisée par le fait que les parois de guidage opposées (21a, 21b) de la tuyère de jet (5) sont réglables dans la direction longitudinale de la chambre (4).

4. Chambre suivant l'une des revendications précédentes, caractérisée par le fait que la longueur (L) de la chambre (4) ou des sections extérieures (4a) de la chambre est réglable en vue de la modification du rapport de la longueur totale (L) de la chambre par rapport à la longueur de la section (4b).

5. Chambre suivant l'une des revendications précédentes, caractérisée par le fait que des parois de guidage opposées (23a, 23b) du diffuseur (6) sont réglables de façon correspondante aux parois réglables (21a, 21b) de la tuyère de jet (5).

6. Chambre suivant l'une des revendications précédentes, caractérisée par le fait que des tôles directrices réglables à la manière de tiroirs dans le flux d'échange du gaz (S) sont disposées entre la chambre (4) et le diffuseur (6) en vue du réglage de la section de sortie de la chambre (4) dans le diffuseur (6).

7. Chambre suivant l'une des revendications précédentes, caractérisée par le fait que la vitesse d'écoulement du jet d'échange de gaz (S) est réglable de façon localement différente sur la chambre (4).

8. Chambre suivant l'une des revendications précédentes, caractérisée par le fait que les corps directeurs d'écoulement (19) sont constitués par des grilles en forme de tamis ou en nids d'abeilles.

9. Chambre suivant l'une des revendications précédentes, caractérisée par le fait que la largeur des mailles de la grille (19) est plus grande dans la zone centrale (4b) de la section de passage de la chambre (4) que dans la zone extérieure.

10. Chambre suivant l'une des revendications précédentes, caractérisée par le fait que plusieurs chambres (4) sont groupées en un bloc dans le flux d'échange de gaz (S).

11. Chambre suivant l'une des revendications précédentes, caractérisée par le fait qu'au moins les parois de la chambre (4) sont munies de mats absorbants.

12. Chambre suivant l'une des revendications précédentes, caractérisée par le fait qu'en vue de la simulation des conditions thermiques régnant dans des chambres laser ou chambres de Raman parcourues par des rayons, le dispositif est réalisé pour un échange de gaz ouvert.

13. Dispositif suivant l'une des revendications précédentes, caractérisé par le fait qu'en vue de la simulation de l'échauffement d'un fluide gazeux dans des chambres laser ou chambres de Raman (4) en fonction du rayonnement optique ou faisceau de rayons qui les parcourt, un dispositif générateur de chaleur est monté dans la chambre (4).

14. Chambre suivant l'une des revendications précédentes, caractérisée par le fait que des moyens sont prévus pour produire un rayon ou faisceau de rayons laser et qu'un additif est ajouté en tant que moyen d'absorption de chaleur à l'air servant de fluide d'échange de gaz en échange ouvert.

15. Chambre suivant l'une des revendications précédentes, caractérisée par le fait que le rayon ou le faisceau de rayons est un rayon ou faisceau de rayons laser au CO , et que de l'hexafluorure de soufre (SF ) est ajouté en tant que moyen d'absorption pour le rayon laser à l'air servant de fluide d'échange de gaz en échange ouvert.
